(19) Europäisches Patentamt
European Patent Office
Office européen des brevets

(11) **EP 1 894 289 B1**

(12) **EUROPEAN PATENT SPECIFICATION**

(45) Date of publication and mention
of the grant of the patent:
**04.11.2009 Bulletin 2009/45**

(51) Int Cl.:
**H02M 3/158** $^{(2006.01)}$

(21) Application number: **06756087.0**

(86) International application number:
**PCT/IB2006/051827**

(22) Date of filing: **08.06.2006**

(87) International publication number:
**WO 2006/131896 (14.12.2006 Gazette 2006/50)**

(54) **HIGH EFFICIENCY POWER CONVERTER, AND MODULATOR AND TRANSMITTER USING IT**

LEISTUNGSWANDLER MIT HOHEM WIRKUNGSGRAD UND MODULATOR UND SENDER ZU DESSEN ANWENDUNG

CONVERTISSEUR DE PUISSANCE A HAUTE EFFICACITE, ET MODULATEUR ET EMETTEUR UTILISANT LEDIT CONVERTISSEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.06.2005 IT TO20050402**

(43) Date of publication of application:
**05.03.2008 Bulletin 2008/10**

(73) Proprietor: **SELEX COMMUNICATIONS S.p.A.**
**16151 Genova (IT)**

(72) Inventor: **ALIMENTI, Alessandro**
**I-00040 Pomezia (roma) (IT)**

(74) Representative: **Deambrogi, Edgardo et al**
**Jacobacci & Partners S.p.A.**
**Corso Emilia 8**
**10152 Torino (IT)**

(56) References cited:
**WO-A-97/08815      WO-A-03/021757**
**WO-A-03/079526     US-A- 5 691 631**
**US-A- 6 094 035      US-A1- 2003 234 634**

**Description**

The present invention relates to a power converter according to the preamble of Claim 1.

Such a converter is typically applied to amplitude modulators for radio transmitters and the present invention also relates to an amplitude modulator and a radio transmitter.

In general, such a converter can be applied, for example, when it is necessary to adjust or convert power in an efficient manner and controlled by an analogue or a digital signal.

To produce a radio transmitter capable of performing each type of modulation (analogue and/or digital), the typical approach is to use a low I-Q level (Cartesian) modulator followed by class A radiofrequency amplifiers; in this followed by class A radio frequency amplifiers; in this manner, high efficiency is not achieved; indeed the typical efficiency of such a solution is less than 50%.

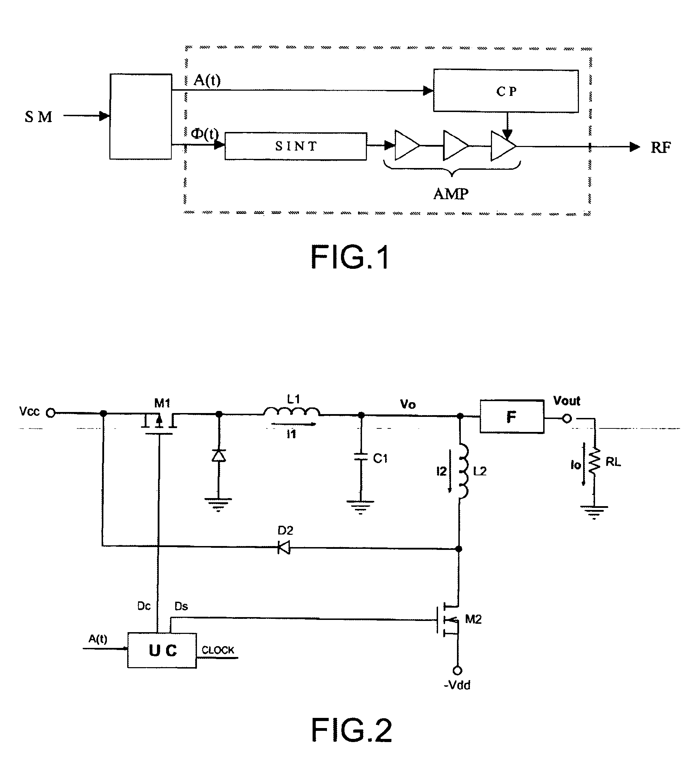

This problem can be solved using a polar modulator (Envelope Elimination and Restoration), as shown schematically in Figure 1, which receives at its input a modulating signal SM, split up into the amplitude A(t) of the modulating signal and the phase $\Phi$(t) of the modulating signal via, for example, a DSP processor, and which delivers at its output an amplitude-modulated radiofrequency signal RF, i.e. $X(t)=A(t) \cdot \cos(\omega_0 t+\Phi(t))$; the polar modulator of Figure 1 has:

- phase modulation carried out according to a synthesizer SYNT,
- amplification of the signal generated by the synthesizer SYNT using a chain of radiofrequency power amplifiers AMP in a saturated class (class AB, B, C, D, E or F) to achieve high efficiency at radiofrequency,
- envelope, i.e. amplitude, modulation introduced through a power converter CP in the final radiofrequency amplifier stage by varying its supply voltage.

The envelope modulator manages almost all the power absorbed by the transmitter; it is therefore important that its efficiency be very high. Furthermore, the envelope modulator must supply, to the final amplifier stage, a variable voltage having the dynamic range set by the modulating signal A(t).

Achieving amplitude modulation by varying the supply voltage of the final amplifier stage has been known for at least 70 years, often referred to as "plate modulation ", and was achieved using a modulation transformer (see, for example, "Radio Engineers Handbook", McGraw Hill, 1943).

The possibility of implementing the amplitude modulator by means of a step-down pulse width modulation regulator, i.e. a "PWM regulator", thereby eliminating the modulation transformer, was introduced at around the end of the 1960s. Today, it is well known both in scientific literature (see, for example, "Polar Modulation-Based RF Power Amplifiers with Enhanced Envelope Processing Technique" by J.K. Jau, F.Y. Han, M.C. Du, T.S. Horng, T.C. Lin at the 34th European Microwave Conference, Amsterdam, 2004) and in patent documentation (see, for example, patents US 3,413,570, US 3,506,920, US 3,588,744, US 4,896,372).

In general, the approach proposed in such literature is always that of a step-down regulator that drives a radiofrequency power amplifier in class AB, B, C, D, E or F or other "saturated" classes, by varying its supply voltage.

A further advancement was proposed in 1999 by patent US 6,636,112 in which there is added in cascade with the step-down PWM regulator a linear regulator having a dual functionality:

a) to follow the quicker dynamics of the signal, making up for the problems inherent in the PWM regulator and described later in the present document,
b) to reduce the noise introduced by the switching in the PWM regulator that normally gives rise to spurious components in the transmitted signal (see patent US 6,636,112 at column 8, lines 34 to 39).

Such a linear regulator reduces the overall efficiency of the system since, by its nature, it dissipates some of the energy supplied by the PWM regulator (see patent US 6,636,112 at column 9, lines 7 to 13).

In patent US 6,636,112 (see at column 8, lines 1 to 14) it is assumed that the resistance exhibited by the final stage at its supply port is constant.

The general aim of the present invention is to eliminate or reduce the drawbacks of the prior art.

This aim is achieved by the power converter having the characteristics indicated in the accompanying claims which are to be considered an integral part of the present description.

The present invention is based on the idea of recovering excess energy accumulated at the output using a suitable circuit and, in particular, transferring it to the input.

A further innovative aspect of the present invention can be appreciated by considering that which is asserted in patent US 6, 636, 112 at column 8, lines 1 to 14, where it is assumed that the resistance exhibited by the final stage at its supply port is constant. Such an affirmation is true only in the presence of perfectly matched loads and is fundamental in the abovementioned patent to succeed in calculating, independently of everything, the voltage to be applied to the final stage in order to have the desired power. In the solution proposed by the present invention there is no such constraint;

the control method allows to calculate (cycle by cycle) the duty cycle to be realized (in order to produce the voltage to be applied to the final stage) even in the presence of a power amplifier whose resistance exhibited at the supply port is variable. The true resistance of the power amplifier can therefore be measured (cycle by cycle) and this value (or an average value thereof) can be used at the next cycle.

With the present invention (by virtue also of the original control method), highly unmatched or variable loads may therefore also be accommodated.

The invention will now be better explained with the aid of the accompanying drawings, which however are intended only as explanatory and non-limiting examples, in which:

Figure 1 shows a block diagram of an amplitude modulation transmitter,
Figure 2 shows a simplified diagram of a first example embodiment of the converter according to the present invention,
Figure 3A shows the possible path of a phasor on the I-Q plane,
Figure 3B shows how the amplitude of the phasor of Figure 3A varies with time and the corresponding output voltage of a converter,
Figure 4 shows how the current $I_1$ varies according to formula [3], and how the voltage $V_{out}$ varies according to the second assumption on which the analytical model of the present invention is based and in light of formula [4],
Figure 5 shows a possible manner in which the current $I_2$ can vary and the associated integral $Q_s$ calculated according to formula [19],
Figure 6 shows a simplified diagram of a second example embodiment of the converter according to the present invention, and
Figure 7 shows a simplified diagram of a third example embodiment of the converter according to the present invention.

To achieve high efficiency, the converter according to the present invention employs the pulse width modulation, or PWM, technique as shown in Figure 2, Figure 6 and Figure 7.

One of the innovative aspects of the present invention is the combining of two different PWM regulators: the first, made up of an inductor $L_1$, a capacitor $C_1$, a transistor $M_1$ and a diode $D_1$, is a step-down regulator and manages the flow of power from the main electrical power source, i.e. the positive voltage source $V_{cc}$, to the load $R_L$, assumed to be substantially resistive; the second, made up of an inductor $L_2$, a transistor $M_2$ and a diode $D_2$, is a step-up regulator and provides a fast discharge of the circuit components $L_1$ and $C_1$, i.e. the two components of the first regulator that store energy.

In other words the step-up regulator is capable of transferring, without dissipating, energy from the circuit components $L_1$ and $C_1$ to the main source $V_{cc}$. To do this sufficiently fast, a secondary electrical power source is preferably used, i.e. the negative voltage source $V_{dd}$.

Naturally, the two PWM regulators and their switching circuit components $M_1$ and $M_2$ are controlled by an appropriate control unit, indicated UC in Figure 2, Figure 6 and Figure 7; the component $M_1$ is driven by a switching signal with a duty cycle $D_c$ and the component $M_2$ is driven by a switching signal with a duty cycle $D_s$.

As regards the switching circuit components, by appropriately choosing the control driver, the transistors $M_1$ and $M_2$ may be N-channel or P-channel MOSFETs, independently of each other, or other types of transistors.

As regards the diodes $D_1$ and $D_2$, these may be PN junction or Schottky diodes. Furthermore, these diodes could be replaced or put together with transistors, for example, of the MOSFET type suitably driven so as to have a very limited voltage drop across these circuit components during the conduction phases; this contributes to further increasing the efficiency.

The main generator $V_{cc}$ must be designed to supply all the power required by the final radiofrequency amplifier stage.

The step-down regulator, controlled by the signal with duty cycle $D_c$, transfers power to the output by allowing the output voltage $V_{OUT}$ to vary, as required according to the modulating signal A(t).

The steady-state response of a step-down regulator is:

$$V_{OUT} = V_{cc} \cdot D_c \qquad [1]$$

where:

$V_{cc}$ = voltage of the main source;
$V_{OUT} \in [0, V_{cc}]$ = output voltage;
$D_c \in [0,1]$ = duty cycle.

The dynamic response is different; this is due to two different physical phenomena:

- the low-pass linear response of the components $L_1$, $C_1$, $R_L$;

- the non-linear response due to the topology of the circuit components $M_1$ and $D_1$ which allows current to flow from $V_{cc}$ to $V_{OUT}$ but not vice versa.

The linear behaviour of the step-down regulator can be compensated for by acting on the duty cycle $D_c$ of the signal driving the transistor $M_1$.

The step-down regulator exhibits its non-linear behaviour when a steep negative slope is required for the output voltage $V_{OUT}$; in that case neither the transistor $M_1$ nor the diode $D_1$ is capable of removing energy from the inductor $L_1$ and the capacitor $C_1$, and the output voltage falls according to the law $R_L$-$C_1$/$L_1$.

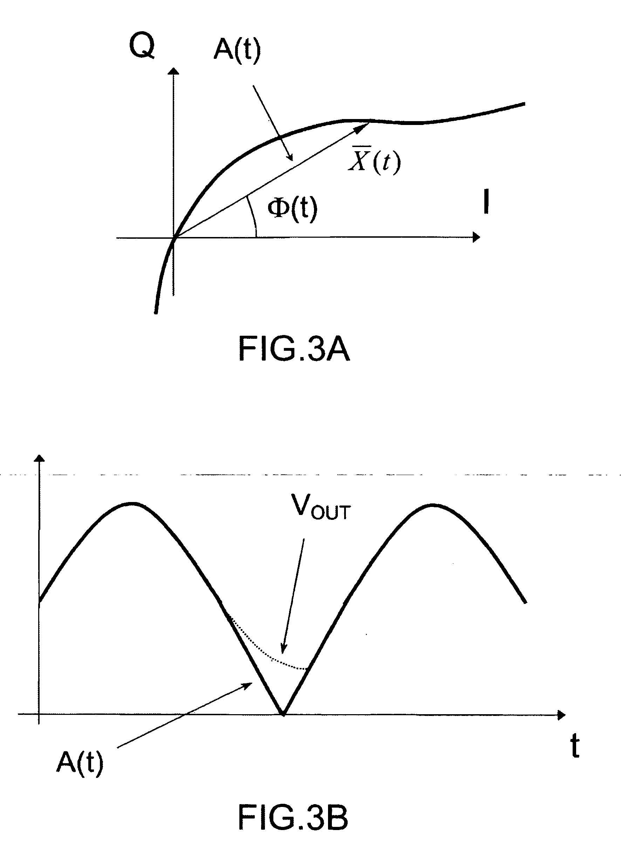

With reference to Figure 3B, it is possible to show that the non-linear distortion starts when the (negative) slope of the desired output voltage exceeds the relaxation time of the circuits $L_1$, $C_1$, $R_L$.

$$\left.\frac{dV_{OUT}}{dt}\right|_{t=0} = -\frac{V_{(0)}}{R_L \cdot C_1} + \frac{I_{(0)}}{C_1} \qquad [2]$$

The direct consequence of formula [2] is that the maximum allowable slope tends to zero with the output voltage $V_0$. If the voltage $V_0$ is close to zero, the output resistance $R_L$ is not able to quickly discharge the capacitor $C_1$ and as a result the voltage $V_{OUT}$ will turn out to have a (negative) derivative close to zero.

This result shows the main problem related to the step-down topology: the circuit cannot reproduce waveforms with cusps down to zero.

A typical example is indicated in Figure 3; in particular Figure 3A shows the path of a phasor $\overline{X}(t)$ of modulus A(t) and phase Φ(t) which, on the I-Q plane, passes through the origin of the axes; trajectories of this type are common in many modulation schemes (such as QAM, SSB, DSB or others). Figure 3B shows the corresponding variation of the amplitude A(t) of the phasor $\overline{X}(t)$ and of the actual output voltage $V_{OUT}$; close to the cusp, the output resistance $R_L$ is not able to discharge the capacitor $C_1$ quickly enough and, as a result, $V_{OUT}$ strays from A(t).

The step-up regulator has been included to solve this specific problem. This second regulator, driven by a signal with duty cycle $D_s$, is for reversing the direction of flow of energy: from the output, or better still from the components $L_1$ and $C_1$, to the main source $V_{cc}$.

The step-up regulator uses a supporting negative voltage source $V_{dd}$ to increase the speed of discharge of the output circuit. Thus, this modulator can follow both the fast dynamics of the modulating signal and the passage through zero, and the approaching to zero with non-zero derivative of the modulating signal.

Furthermore, the step-up regulator, by enabling excess energy at the output to be removed by transferring it to the main generator $V_{cc}$, keeps the overall efficiency high.

The use of step-down and step-up PWM regulators to vary the voltage $V_{OUT}$ results in high efficiency and high dynamics but introduces noise at the switching frequency and at its harmonics. This noise can be seen by the presence of spurious components in the amplitude modulation (at the switching frequency and at its harmonics) with possible problems in terms of "adjacent-channel noise".

The switching frequency must be (according to the Nyquist theorem) at least twice the maximum bandwidth of the modulating signal; the result is that the problem of transmission of spurious components does not affect the in-band signal but rather the adjacent channels.

To solve this problem, the present invention considers two different approaches.

The first approach consists in removing the unwanted frequencies (the switching frequency $f_{sw}$ and its harmonics $2 f_{sw}$, $3 f_{sw}$, ...) using a multiple notch filter.

The variation in phase introduced by this filter, at the envelope frequencies of the modulator, will be considered as part of the total phase lag between A(t) and $V_{OUT}$.

The notch filter will have a structure that minimizes the equivalent capacitance in relation to ground, since it will be added to the capacitance of the capacitor $C_1$, and it is the main component responsible for the non-linear distortions previously described.

In Figure 2, Figure 6 and Figure 7, the multiple notch filter is labelled F.

The second approach consists in spreading the unwanted frequencies by applying a random and variable time-domain jitter to the switching and therefore causing the duration T of the switching period to vary slightly and continuously in a random manner.

This solution, simple from the circuit point of view, increases the complexity of the control unit UC (see Figure 2, Figure 6 and Figure 7) not only through the introduction of a random generator but also because in the control algorithm formulae the duration of the switching period becomes a variable.

It is to be noted that these two approaches may advantageously be used in combination.

From the control point of view, the system can be considered as having two inputs, i.e. the duty cycles $D_c$ and $D_s$, and one output, i.e. the output voltage $V_{OUT}$. An analytical model has therefore been developed intended to be used for a digital electronic control.

This model calculates the value of the output voltage $V_{OUT}$ as a function of the duty cycle $D_c$ at the end of each switching cycle. This model can easily be inverted, providing the duty cycle $D_c$ as a function of the output voltage $V_{OUT}$. The acceptable range of values for $D_c$ is between 0 and 1; if the calculated value of $D_c$ is less than zero, the algorithm calculates the duty cycle $D_s$, which ensures the desired output voltage.

With reference to Figure 2, the following six assumptions are made.

According to the first assumption, the voltage $V_0$ across the capacitor $C_1$ is equal to the output voltage $V_{OUT}$ in the band of A(t). Such an assumption is justified by the notch structure of the output filter which therefore does not substantially attenuate signals in the band of the modulating signal.

According to the second assumption, the voltage $V_0$ across the capacitor $C_1$ is constant during each switching cycle.

According to the third assumption, the power amplifier is modelled as a resistor of value $R_L$. In the disclosure that follows, the resistance $R_L$ will be assumed to be constant in each switching cycle. If therefore the power amplifier is modelled with a characteristic $R_L = R_L(V_{OUT})$, possible non-linear behaviour of the amplifier may also be taken into account in the model. In that case, the following expression can be used: $R_L^{(n)} - R_L(V_{OUT}^{(n)})$.

According to the fourth assumption, the threshold voltage of the diode $D_1$ and the diode $D_2$ is assumed to be zero.

According to the fifth assumption, the current $I_2$ that flows through the inductor $L_2$ is zero at the end of each switching cycle. This choice has been made by considering that the energy flow is mainly directed from the source $V_{cc}$ to the load $R_L$ and only in some particular cases in the reverse direction.

Thus two advantages arise.

The first advantage is related to the fact that there would only be two (instead of three) state variables for the system, since two are the components that store energy from one cycle to the next, namely the inductor $L_1$ and the capacitor $C_1$.

The second advantage is related to the fact that energy loops are thus avoided by design. In other words, the undesired condition in which energy is taken from the source $V_{cc}$, transferred to the output (by the step-down regulator) and then returned (by the step-up regulator) to the source $V_{cc}$ never arises.

According to the sixth assumption, the variation in the duty cycle $D_c$ from one switching cycle to the next is small compared with the said duty cycle.

The model uses two relationships:

- the continuity of the current $I_1$ through the inductor $L_1$, represented by formula [3] below, and
- the preservation of the charge on the capacitor $C_1$, represented by formula [4] below.

$$I_1^{(n+1)} = I_1^{(n)} + \Delta I_1^+ - \Delta I_1^- \qquad [3]$$

$$V_{OUT}^{(n+1)} = V_{OUT}^{(n)} + \frac{\Delta Q^{(n)}}{C_1} \qquad [4]$$

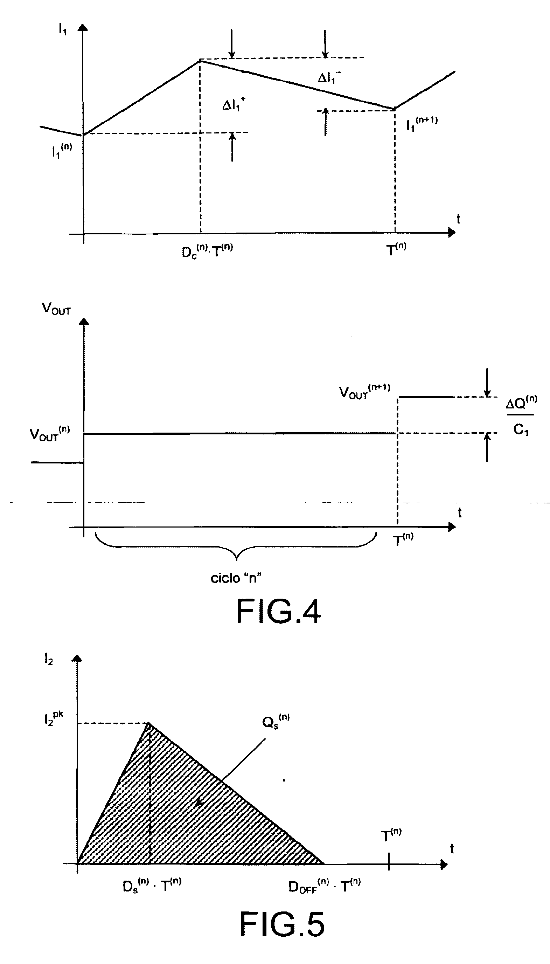

Figure 4 shows how the current $I_1$ varies and how the voltage $V_{out}$ varies, according to the assumption made. By substituting in formulae [3] and [4] the following formulae [5], [6] and [7]:

$$\Delta I_1^+ = \frac{V_{cc} - V_{OUT}^{(n)}}{L_1} D_c^{(n)} \cdot T^{(n)} \qquad [5]$$

$$\Delta I_1^- = \frac{V_{OUT}^{(n)}}{L_1}(1 - D_c^{(n)}) \cdot T^{(n)} \qquad [6]$$

$$\Delta Q^{(n)} = (I_1^{(n)} - I_0^{(n)}) \cdot T^{(n)} + \frac{D_c^{(n)} \cdot T^{(n)}}{2} \Delta I_1^+ + \frac{(1 - D_c^{(n)}) \cdot T^{(n)}}{2}(2 \cdot \Delta I_1^+ - \Delta I_1^-) \qquad [7]$$

where $I_0^{(n)} = \dfrac{V_{OUT}^{(n)}}{R_L}$ , the following formulae [8] and [9] are obtained:

$$I_1^{(n+1)} = I_1^{(n)} + \frac{V_{cc} \cdot T^{(n)}}{L_1} \cdot D_c^{(n)} - \frac{V_{OUT}^{(n)}}{L_1} \cdot T^{(n)} \qquad [8]$$

$$V_{OUT}^{(n+1)} = V_{OUT}^{(n)} \cdot \left[1 - \frac{T^{(n)}}{R_L \cdot C_1} - \frac{(T^{(n)})^2}{2 \cdot L_1 \cdot C_1}\right] + \frac{V_{cc} \cdot (T^{(n)})^2}{L_1 \cdot C_1} \cdot D_c^{(n)}\left(1 - \frac{D_c^{(n)}}{2}\right) + I_1^{(n)} \cdot \frac{T^{(n)}}{C_1} \qquad [9]$$

Formulae [8] and [9] represent a simplified, but very effective, model of the step-down PWM regulator and allow to calculate the voltage $V_0$ across the capacitor $C_1$ (which corresponds to the output voltage $V_{OUT}$) and the current $I_1$ flowing through the inductor $L_1$ at cycle "n+1" on the basis of the values of the current $I_1$, voltage $V_{OUT}$, duty cycle $D_c$ and duration T of the switching period at cycle "n".

Based on this analytical model, effective control methods can be implemented for controlling the switching components of the PWM regulators included in the power converter according to the present invention.

A first control method is based purely on the analytical model of formulae [8] and [9]; the simplified diagram of the associated converter is shown in Figure 2.

The problem that needs to be solved is to calculate which duty cycle $D_c$ has to be applied to cycle "n" ($D_c^{(n)}$ in Figure 4), with $V_{OUT}^{(n+1)}$ (new target voltage), $V_{OUT}^{(n)}$ and $I_1^{(n)}$ (present values of the two state variables of the system), and $T^{(n)}$ being known.

Therefore formula [9] needs to be processed, expressing the duty cycle $D_c$ as a function of all the remainder. The problem is the non-linearity of formula [9] with respect to the duty cycle $D_c$.

Rather than solving a quadratic equation, with complicated processing and which would require a complex logic circuit, the sixth assumption mentioned previously is exploited together with the fact that the variation in the term $(1-D_c^{(n)}/2)$ is definitely less than the variation in $D_c$ (both present in the second term of formula [9]).

Therefore, this leads to:

$$D_c^{(n)} = \frac{V_{OUT}^{(n+1)} - V_{OUT}^{(n)} \cdot \left[1 - \dfrac{T^{(n)}}{R_L \cdot C_1} - \dfrac{(T^{(n)})^2}{2 \cdot L_1 \cdot C_1}\right] - I_1^{(n)} \cdot \dfrac{T^{(n)}}{C_1}}{\dfrac{V_{cc} \cdot (T^{(n)})^2}{L_1 \cdot C_1} \cdot \left(1 - \dfrac{D_c^{(n-1)}}{2}\right)} \qquad [10]$$

Formula [10] is the one which allows to obtain the duty cycle $D_c$ to be realized at cycle "n" to obtain the voltage $V_{OUT}^{(n+1)}$, with the values $V_{OUT}^{(n)}$, $I_1^{(n)}$ and $D_c^{(n-1)}$ being known.

The logic control unit UC must therefore calculate, at each cycle, the following pair of formulae, and specifically formula [11] first followed by formula [12]:

$$D_c^{(n)} = \frac{V_{OUT}^{(n+1)} - V_{OUT}^{(n)} \cdot \left[1 - \frac{T^{(n)}}{R_L \cdot C_1} - \frac{(T^{(n)})^2}{2 \cdot L_1 \cdot C_1}\right] - I_1^{(n)} \cdot \frac{T^{(n)}}{C_1}}{\frac{V_{cc} \cdot (T^{(n)})^2}{L_1 \cdot C_1} \cdot \left(1 - \frac{D_c^{(n-1)}}{2}\right)} \qquad [11]$$

$$I_1^{(n+1)} = I_1^{(n)} + \frac{V_{cc} \cdot T^{(n)}}{L_1} \cdot D_c^{(n)} - \frac{V_{OUT}^{(n)}}{L_1} \cdot T^{(n)} \qquad \text{if } I_1^{(n+1)} < 0 \implies I_1^{(n+1)} = 0$$

Considering that the current $I_1$ cannot reverse its direction, formula [12] must be saturated at zero, i.e.: if $I_1^{(n+1)} < 0 \Rightarrow I_1^{(n+1)} = 0$

The result of formula [11], however, may be positive or negative, but a negative duty cycle does not have any physical meaning. In that case, the model is indicating that to reach the target voltage $V_{OUT}^{(n+1)}$, charge would need to be taken away from $C_1$, and this can be achieved by setting $D_c = 0$ and $D_s > 0$.

Formulae [8] and [9] of the model, in that case, will continue to be valid, setting $D_c^{(n)} = 0$ and with the addition of a quantity of charge $Q_s^{(n)}$ which must be removed from $C_1$; therefore, it is:

$$I_1^{(n+1)} = I_1^{(n)} - \frac{V_{OUT}^{(n)}}{L_1} \cdot T^{(n)} \qquad [13]$$

$$V_{OUT}^{(n+1)} = V_{OUT}^{(n)} \cdot \left[1 - \frac{T^{(n)}}{R_L \cdot C_1} - \frac{(T^{(n)})^2}{2 \cdot L_1 \cdot C_1}\right] + I_1^{(n)} \cdot \frac{T^{(n)}}{C_1} - \frac{Q_s^{(n)}}{C_1} \qquad [14]$$

In the cycle in question, the charge $Q_s^{(n)}$ to be removed from $C_1$ to obtain $V_{OUT}^{(n+1)}$ can therefore be calculated as:

$$Q_s^{(n)} = -C_1 \cdot \left[V_{OUT}^{(n+1)} - V_{OUT}^{(n)} \cdot \left(1 - \frac{T^{(n)}}{R_L \cdot C_1} - \frac{(T^{(n)})^2}{2 \cdot L_1 \cdot C_1}\right) - I_1^{(n)} \cdot \frac{T^{(n)}}{C_1}\right] \qquad [15]$$

It is noted that formula [15], apart from the scale factor "$-C_1$", corresponds to the numerator of formula [11] and therefore does not need to be recalculated. If therefore at cycle "n" the result is $D_c < 0$, then $D_c = 0$ must be imposed and the charge to be removed from the capacitor $C_1$ must be calculated on the basis of formula [15] (which charge is definitely positive since the denominator of formula [11] is definitely positive).

At this point, by also exploiting the fifth assumption previously mentioned, the duty cycle $D_s^{(n)}$ may be calculated from the charge $Q_s^{(n)}$ (refer to Figure 5 for a better understanding).

$$I_2^{pk} = \frac{V_{OUT}^{(n)} + V_{dd}}{L_2} \cdot D_s^{(n)} \cdot T^{(n)} \qquad [16]$$

$$I_2^{pk} = \frac{V_{cc} - V_{OUT}^{(n)}}{L_2} \cdot (D_{OFF}^{(n)} - D_s^{(n)}) \cdot T^{(n)} \qquad [17]$$

By equalizing formulae [16] and [17], the instant at which the current $I_2$ returns to zero can be calculated, corresponding to $D_{OFF}^{(n)} T^{(n)}$ :

$$D_{OFF}^{(n)} = D_s^{(n)} \cdot \frac{V_{cc} + V_{dd}}{V_{cc} - V_{OUT}^{(n)}}$$

The constraint imposed by the fifth assumption previously mentioned is reflected in the maximum value of $D_{OFF}^{(n)}$, which must be equal to 1. It follows that $D_s^{(n)}$ cannot exceed a certain value which we will indicate $D_{sMAX}^{(n)}$:

$$D_{sMAX}^{(n)} = \frac{V_{cc} - V_{OUT}^{(n)}}{V_{cc} + V_{dd}} \qquad [18]$$

$Q_s^{(n)}$ can now be calculated as a function of $D_s^{(n)}$ :

$$Q_s^{(n)} = \frac{I_2^{pk} \cdot D_{OFF}^{(n)} \cdot T^{(n)}}{2} = \frac{\left(V_{OUT}^{(n)} + V_{dd}\right)}{L_2} \cdot \frac{\left(T^{(n)}\right)^2}{2} \cdot \frac{\left(V_{cc} + V_{dd}\right)}{\left(V_{cc} - V_{OUT}^{(n)}\right)} \cdot \left(D_s^{(n)}\right)^2 \qquad [19]$$

By equalizing formulae [15] and [19] and expressing $D_s^{(n)}$, we obtain:

$$D_s^{(n)} = \sqrt{\frac{2 \cdot L_2 \cdot C_1}{\left(T^{(n)}\right)^2 \cdot \left(V_{cc} + V_{dd}\right)} \cdot \left[-V_{OUT}^{(n+1)} + V_{OUT}^{(n)} \cdot \left(1 - \frac{T^{(n)}}{R_L \cdot C_1} - \frac{\left(T^{(n)}\right)^2}{2 \cdot L_1 \cdot C_1}\right) + I_1^{(n)} \cdot \frac{T^{(n)}}{C_1}\right] \cdot \frac{\left(V_{cc} - V_{OUT}^{(n)}\right)}{\left(V_{dd} + V_{OUT}^{(n)}\right)}}$$

In conclusion, the algorithm for calculating $D_c^{(n)}$ and $D_s^{(n)}$ is as follows.

Step 1 (first method) :

$$N^{(n)} = V_{OUT}^{(n+1)} - V_{OUT}^{(n)} \cdot \left[1 - \frac{T^{(n)}}{R_L^{(n)} \cdot C_1} - \frac{\left(T^{(n)}\right)^2}{2 \cdot L_1 \cdot C_1}\right] - I_1^{(n)} \cdot \frac{T^{(n)}}{C_1} \qquad [21]$$

Step 2 (first method) :

If $N^{(n)} \geq 0$

$$D_c^{(n)} = \frac{N^{(n)}}{\dfrac{V_{cc} \cdot \left(T^{(n)}\right)^2}{L_1 \cdot C_1} \cdot \left(1 - \dfrac{D_c^{(n-1)}}{2}\right)} \qquad [22]$$

$$D_s^{(n)} = 0$$

If $N^{(n)} < 0$

$$D_c^{(n)} = 0$$

$$D_s^{(n)} = \sqrt{\frac{2 \cdot L_2 \cdot C_1}{\left(T^{(n)}\right)^2 \cdot \left(V_{cc} + V_{dd}\right)} \cdot \left(-N^{(n)}\right) \cdot \frac{\left(V_{cc} - V_{OUT}^{(n)}\right)}{\left(V_{dd} + V_{OUT}^{(n)}\right)}} \qquad [23]$$

where $D_s^{(n)}$ must be limited to $D_{sMAX}^{(n)}$ according to [18].
Step 3 (first method):

$$I_c = I_1^{(n)} + \frac{V_{cc} \cdot T^{(n)}}{L_1} \cdot D_c^{(n)} - \frac{V_{OUT}^{(n)}}{L_1} \cdot T^{(n)} \qquad [24]$$

Step 4 (first method) :

if $I_c \geq 0 \Rightarrow I_1^{(n+1)} = I_c$;
if $I_c < 0 \Rightarrow I_1^{(n+1)} = 0$.

Formula [23] is the most difficult to be calculated by dedicated logic circuitry, because of the presence of the term $(V_{cc} - V_{OUT}^{(n)})/(V_{dd} + V_{OUT}^{(n)})$ and because of the square root.
Given that the discharge (and therefore the calculation of formula [23]) takes place normally when $V_{OUT}^{(n)}$ is small, the following approximation can be applied:

$$\left(\frac{V_{cc} - V_{OUT}^{(n)}}{V_{dd} + V_{OUT}^{(n)}}\right) \approx \frac{V_{cc}}{V_{dd}} - \frac{\left(V_{cc} + V_{dd}\right)}{V_{dd}^2} \cdot V_{OUT}^{(n)} \qquad [25]$$

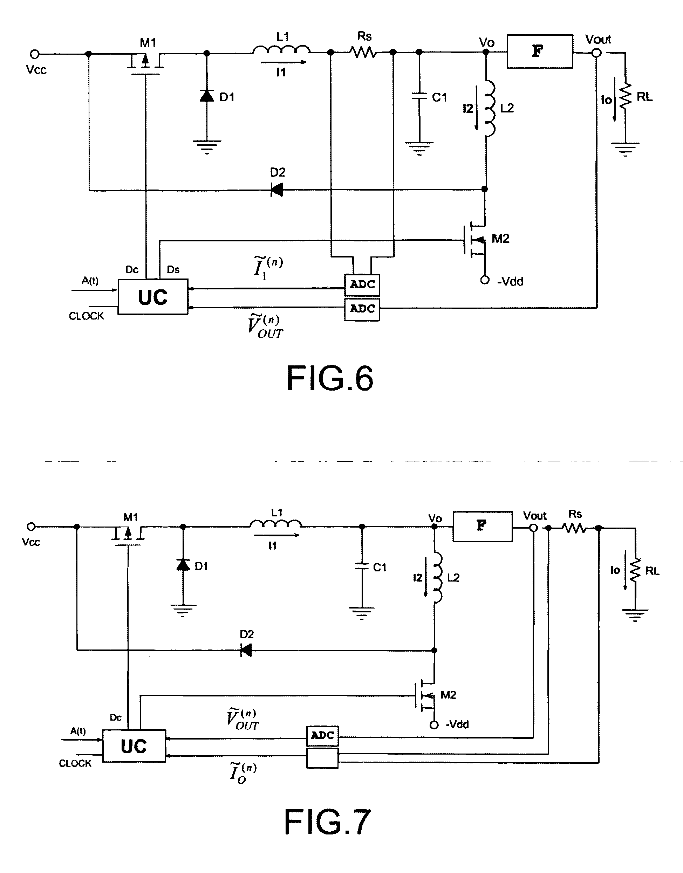

A second control method is based on the analytical model of formulae [8] and [9], but instead of obtaining $I_1^{(n)}$ from the model and assuming that the $V_{OUT}^{(n)}$ requested is actually that obtained, it measures these two quantities.
The simplified diagram of the associated converter is shown in Figure 6; this differs from the diagram of Figure 2 by the addition of two circuit components ADC, analogue-to-digital converters, to carry out the measurements.
This second method exhibits the following advantages:

• lower complexity in the algorithm since the calculations related to steps 3 and 4 illustrated previously are avoided,

• possibility of including protective measures against excess currents or excess voltages,

• more accurate control during the start transient, when the current $I_1$ of the model is not stable enough yet.

Naturally, it is necessary to provide the circuitry needed to measure the abovementioned quantities.
The idea is to make use of the measured quantities not for a closed loop control in the conventional sense, but as initial values for cycle "n" in order to calculate, by means of the model, the duty cycle.

With $\widetilde{V}_{OUT}^{(n)}$ and $\widetilde{I}_1^{(n)}$ used to indicate the measurements, the algorithm will turn out to be made up simply of the following two steps:

Step 1 (second method) :

$$N^{(n)} = V_{OUT}^{(n+1)} - \tilde{V}_{OUT}^{(n)} \cdot \left[ 1 - \frac{T^{(n)}}{R_L^{(n)} \cdot C_1} - \frac{(T^{(n)})^2}{2 \cdot L_1 \cdot C_1} \right] - \tilde{I}_1^{(n)} \cdot \frac{T^{(n)}}{C_1} \qquad [26]$$

where $V_{OUT}^{(n+1)}$ is the next value of the output voltage as a consequence of the input A(t).

Step 2 (second method) :

If $N^{(n)} \geq 0$

$$D_c^{(n)} = \frac{N^{(n)}}{\frac{V_{cc} \cdot (T^{(n)})^2}{L_1 \cdot C_1} \cdot \left( 1 - \frac{D_c^{(n-1)}}{2} \right)} \qquad [27]$$

$$D_s^{(n)} = 0$$

If $N^{(n)} < 0$

$$D_c^{(n)} = 0$$

$$D_s^{(n)} = \sqrt{ \frac{2 \cdot L_2 \cdot C_1}{(T^{(n)})^2 \cdot (V_{cc} + V_{dd})} \cdot \left( -N^{(n)} \right) \cdot \frac{\left( V_{cc} - V_{OUT}^{(n)} \right)}{\left( V_{dd} + V_{OUT}^{(n)} \right)} } \qquad [28]$$

where $D_s^{(n)}$ must be limited to $D_{sMAX}^{(n)}$ according to [18].

A third control method is based on the analytical model of formulae [8] and [9], but it needs the measurement of the output voltage $V_{OUT}$ and the determination of the load applied at the output, in particular the actual value of the resistive load $R_L$.

In the example of Figure 7, the load is determined by measuring the output current $I_0$; the ratio between the measured value of the voltage $V_{OUT}$ and the measured value of the current $I_o$ corresponds to the resistance value of the load.

The load can be determined in other ways, for example by measuring the power transferred to the load or by measuring the converter input current and estimating the output of the converter.

A simplified diagram of a converter based on this method is shown in Figure 7; this differs from the diagram of Figure 2 by the addition of two circuit components ADC, analogue-to-digital converters, to carry out the measurements.

The true resistance of the power amplifier, in particular of its output stage, can therefore be worked out (cycle by cycle, if this is desired) and the said value (or an average value thereof) can be used at the next cycle to precisely calculate the duty cycle needed to obtain the desired power.

With $\tilde{V}_{OUT}^{(n)}$ and $\tilde{I}_O^{(n)}$ used to indicate the measurements, the algorithm will turn out to be made up of the following steps:

Step 1 (third method):

$$N^{(n)} = V_{OUT}^{(n+1)} - \widetilde{V}_{OUT}^{(n)} \cdot \left[ 1 - \frac{T^{(n)}}{\widetilde{R}_L^{(n)} \cdot C_1} - \frac{(T^{(n)})^2}{2 \cdot L_1 \cdot C_1} \right] - I_1^{(n)} \cdot \frac{T^{(n)}}{C_1} \qquad [29]$$

where $V_{OUT}^{(n+1)}$ is the next value of the output voltage as a consequence of the input A(t); $I_1^{(n)}$ is the value of the current through the inductor $L_1$ calculated using the model; $\widetilde{R}_L^{(n)} = \widetilde{V}_{OUT}^{(n)} / \widetilde{I}_O^{(n)}$ is the resistive load that the power amplifier presents at the supply port.

Step 2 (third method):

If $N^{(n)}, \geq 0$

$$D_c^{(n)} = \frac{N^{(n)}}{\dfrac{V_{cc} \cdot (T^{(n)})^2}{L_1 \cdot C_1} \cdot \left(1 - \dfrac{D_c^{(n-1)}}{2}\right)} \qquad [30]$$

$$D_s^{(n)} = 0$$

If $N^{(n)} < 0$

$$D_c^{(n)} = 0$$

$$D_s^{(n)} = \sqrt{\frac{2 \cdot L_2 \cdot C_1}{(T^{(n)})^2 \cdot (V_{cc} + V_{dd})} \cdot (-N^{(n)}) \cdot \frac{(V_{cc} - V_{OUT}^{(n)})}{(V_{dd} + V_{OUT}^{(n)})}} \qquad [31]$$

where $D_s^{(n)}$ must be limited to $D_{sMAX}^{(n)}$ according to [18].

Step 3 (third method):

$$I_c = I_1^{(n)} + \frac{V_{cc} \cdot T^{(n)}}{L_1} \cdot D_c^{(n)} - \frac{\widetilde{V}_{OUT}^{(n)}}{L_1} \cdot T^{(n)} \qquad [32]$$

Step 4 (third method):

if $I_c \ 20 => I_1^{(n+1)} = I_c$;
if $I_c < 0 => I_1^{(n+1)} = 0$.

The diagrams of Figure 2, Figure 6 and Figure 7 are fairly complete, but simplified; for example, the MOSFET transistor driver circuits are not elaborated; also, for example, the circuitry that generates the voltage signals to be sent to the circuit components ADC is represented only in an indicative manner: in the case of determination of a voltage signal, it is reduced to a single wire, while in the case of determination of a current signal it is reduced to a resistor, namely the resistor Rs.

In practice, for example, it will be necessary to include circuits for adapting the voltage signal to be sampled to the dynamic range of the analogue input voltage of the specific circuit components ADC chosen; in the case of detecting the current signal, a suitable current-voltage converter must be chosen.

Furthermore, the signals detected must be suitably filtered (anti-aliasing filter) so as not to allow the harmonics and other frequencies, outside the band of the circuit components ADC, to be sampled.

Finally, a clock signal must be supplied to the circuit components ADC, at the desired sampling frequency.

It is worth noting that, in these diagrams, both the PWM converters are connected directly to each other; however, one cannot rule out that this connection might be made indirectly via other circuit components not represented in these diagrams.

For completeness, a list of components that can be used in these circuits is set out below in table form.

| Circuit component | Manufacturer | Component identification |
|---|---|---|
| M1 | INTERNATIONAL RECTIFIER | IRLR9343 |
| D1 | INTERNATIONAL RECTIFIER | 50WQ10FN |
| L1 | PULSE ENGINEERING | PE-54044S |
| C1 | TERN MURATA MANUFACTURING | 3 x 330nF in parallel |
| M2 | INTERNATIONAL RECTIFIER | IRLR3105 |
| L2 | COILCRAFT | 4.7uH |
| D2 | INTERNATIONAL RECTIFIER | 50WQ10FN |
| UC | XILINX<br><br>UNITRODE | XC2S150E<br>+<br>UC2715 |
| ADC | ANALOG DEVICES | AD7894 |

Clearly, various modifications can be introduced to that which has been described and illustrated, by way of example, and the means or materials described can be replaced by equivalent means or materials without consequently departing from the claimed scope of protection.

**Claims**

1. Power converter adapted to be connected to an electrical power source and manage the flow of power from said source to a load, the converter receiving at its input a control signal (A(t)) for the conversion and being **characterised in that** it includes:

   - a first regulator circuit ($L_1$, $C_1$, $M_1$, $D_1$) of the pulse width modulation step-down type, which is adapted to be connected to a positive voltage source ($V_{cc}$) and referred to ground so as to provide a positive voltage output;
   - an energy recovery circuit, including a second regulator circuit ($L_2$, $M_2$, $D_2$) of the pulse width modulation step-up type, connected to said first regulator circuit ($L_1$, $C_1$, $M_1$, $D_1$), which is adapted to be connected to a supporting negative voltage source ($V_{dd}$), so as to quickly discharge energy-storing circuit components ($L_1$, $C_1$) of the said first regulator circuit ($L_1$, $C_1$, $M_1$, $D_1$),

   wherein:

   - the input of the said second regulator circuit ($L_2$, $M_2$, $D_2$) is connected to the output of the said first regulator circuit ($L_1$, $C_1$, $M_1$, $D_1$) and the output of the said second regulator circuit ($L_2$, $M_2$, $D_2$) is connected to the input of the said first regulator circuit ($L_1$, $C_1$, $M_1$, $D_1$),
   - the first regulator circuit includes a series switching element (M1), a shunt diode to ground (D1), a series inductance (L1) and a shunt capacitor to ground (C1),
   - the second regulator circuit includes a series inductance (L2), a shunt switching element (M2) connected to the supporting negative voltage source (Vdd), and a freewheeling diode (D2) to the positive voltage source (Vcc), the switching component (M1) of the first regulator circuit being driven by a switching signal with a first duty cycle (Dc) and the switching component (M2) of the second regulator circuit being driven by a switching signal with a second duty cycle (Ds); and
   - a control unit (UC) for switching circuit components ($M_1$, $M_2$) of the said first ($L_1$, $C_1$, $M_1$, $D_1$) and second regulator circuit ($L_2$, $M_2$, $D_2$), which is arranged to control the switching of the said components ($M_1$, $M_2$) and

to determine the said duty cycles ($D_c$, $D_s$) so as they do not overlap in time, in relation to the said control signal (A(t)), according to a predetermined feed-forward control method based on an open-loop analytical model of the said first regulator circuit ($L_1$, $C_1$, $M_1$, $D_1$).

**2.** Power converter according to Claim 1, in which the said control unit (UC) is arranged to set the width ($D_c$, $D_s$) of the switching pulses periodically, at each switching cycle.

**3.** Power converter according to Claim 2, **characterized in that** the said control unit (UC) is arranged to set the width ($D_c$, $D_s$) of the switching pulses also in relation to the previous state at least of the said first regulator circuit ($L_1$, $C_1$, $M_1$, $D_1$), in particular the state at the previous switching cycle.

**4.** Power converter according to one of Claims 1 to 3, **characterized in that** the said control unit (UC) is adapted to apply a random and variable time-domain jitter to the switching of the said switching circuit components.

**5.** Power converter according to any of the preceding claims, **characterized in that** it includes filter means (F) connected downstream of the said first regulator circuit ($L_1$, $C_1$, $M_1$, $D_1$) and adapted to filter out the switching noise.

**6.** Power converter according to Claim 5, **characterized in that** the said filter means (F) comprise a multiple notch filter.

**7.** Power converter according to any of the preceding claims, **characterized in that** it includes means (ADC) adapted to determine at least some of the state variables ($I_1$, $V_o$) of the said first regulator circuit ($L_1$, $C_1$, $M_1$, $D_1$), and **in that** the said control unit (UC) is connected to the said determination means (ADC) and is adapted to operate according to a control method, based on the analytical model of the first regulator circuit ($L_1$, $C_1$, $M_1$, $D_1$), that takes into account the values of the state variables ($I_1$, $V_o$) determined.

**8.** Power converter according to any of the preceding claims, **characterized in that** it includes determination means (ADC) adapted to detect the output voltage ($V_{out}$) at the converter and the load ($R_L$) applied at the output of the converter, and in which the said control unit (UC) is connected to the said determination means (ADC) and is adapted to operate according to a control method, based on the analytical model of the first regulator circuit ($L_1$, $C_1$, $M_1$, $D_1$), that takes into account the output voltage ($V_{out}$) determined and the load on the output ($R_L$) determined.

**9.** Power converter according to Claim 8, in which the said determination means (ADC) are adapted to measure the output voltage ($V_{out}$) at the converter and the output current ($I_o$) at the converter.

**10.** Power converter according to one of the preceding claims, **characterized in that** it is adapted to power any type of load or actuator.

**11.** Amplitude modulator adapted to receive at the input a modulating signal and including an amplifier and a power supplier adapted to supply power, **characterized in that** the said power supplier includes a power converter according to one of the preceding claims, whose control signal (A(t)) for the conversion corresponds to the said modulating signal.

**12.** Radio transmitter including an amplitude modulator according to the preceding claim.

**Patentansprüche**

**1.** Energiewandler, der dazu angepasst ist, mit einer elektrischen Energiequelle verbunden zu werden und den Energiefluss von der Quelle zu einer Last zu verwalten, wobei der Wandler an seinem Eingang ein Steuerungssignal (A(t)) für die Umwandlung empfängt, **dadurch gekennzeichnet, dass** er umfasst:

eine erste Regelschaltung ($L_1$, $C_1$, $M_1$, $D_1$) von der Pulsbreitemodulations-Abwärts-Art, die dazu angepasst ist, mit einer positiven Spannungsquelle ($V_{cc}$) verbunden zu werden und auf Masse bezogen zu werden, um eine positive Ausgangsspannung bereitzustellen;
eine Energierückgewinnungsschaltung mit einer zweiten Regelschaltung ($L_2$, $M_2$, $D_2$) von der Pulsbreitenmodulations-Aufwärts-Art, die mit der ersten Regelschaltung ($L_1$, $C_1$, $M_1$, $D_1$) verbunden ist, die dazu angepasst ist, mit einer unterstützenden negativen Spannungsquelle ($V_{dd}$) verbunden zu werden, um die Energie speichernden Schaltungskomponenten ($L_1$, $C_1$) der ersten Regelschaltung ($L_1$, $C_1$, $M_1$, $D_1$) schnell zu entladen,

wobei:

der Eingang der zweiten Regelschaltung ($L_2$, $M_2$, $D_2$) mit dem Ausgang der ersten Regelschaltung ($L_1$, $C_1$, $M_1$, $D_1$) verbunden ist und der Ausgang der zweiten Regelschaltung ($L_2$, $M_2$, $D_2$) mit dem Eingang der ersten Regelschaltung ($L_1$, $C_1$, $M_1$, $D_1$) verbunden ist,
die erste Regelschaltung ein Reihenschaltelement (M1), eine Shuntdiode auf Masse (D1), eine Reiheninduktivität (L1) und einen Shuntkondensator (C1) auf Masse umfasst,
die zweite Regelschaltung eine Reiheninduktivität (L2), ein Shuntschaltelement (M2), das mit der unterstützenden negativen Spannungsquelle (Vdd) verbunden ist, und eine Freilaufdiode (D2) zu der positiven Spannungsquelle (Vcc) umfasst,
die Schaltkomponente (M1), der ersten Regelschaltung durch ein Schaltsignal mit einem ersten Betriebszyklus (Dc) angesteuert wird, und die Schaltkomponente (M2) der zweiten Regelschaltung durch ein Schaltsignal mit einem zweiten Betriebszyklus (Ds) angesteuert wird; und
eine Steuereinheit (UC) zum Schalten von Schaltungskomponenten ($M_1$, $M_2$) der ersten ($L_1$, $C_1$, $M_1$, $D_1$) und der zweiten Regelschaltung ($L_2$, $M_2$, $D_2$), die dazu eingerichtet ist, das Schalten der Komponenten ($M_1$, $M_2$) zu steuern und die Betriebszyklen ($D_c$, $D_s$) zu bestimmen, so dass diese sich zeitlich nicht überlappen, in Bezug auf das Steuerungssignal (A(t)), gemäß einem vorbestimmten Regelverfahren basierend auf einem analytischen Modell einer offenen Schleife der ersten Regelschaltung ($L_1$, $C_1$, $M_1$, $D_1$).

2. Energiewandler gemäß Anspruch 1, bei dem die Steuerungseinheit (UC) eingerichtet ist, die Breite ($D_c$, $D_s$) der Schaltpulse periodisch bei jedem Schaltzyklus einzustellen.

3. Energiewandler gemäß Anspruch 2, **dadurch gekennzeichnet, dass** die Steuerungseinheit (UC) eingerichtet ist, die Breite ($D_c$, $D_s$) der Schaltpulse auch in Bezug zu dem vorherigen Zustand von zumindest der ersten Regelschaltung ($L_1$, $C_1$, $M_1$, $D_1$) einzustellen, insbesondere dem Zustand bei dem vorhergehenden Schaltzyklus.

4. Energiewandler gemäß einem der Ansprüche 1 bis 3, **dadurch gekennzeichnet, dass** die Steuerungseinheit (UC) angepasst ist, eine zufällige und variable Zeitbereichsschwankung auf das Schalten der Schaltungskomponenten anzuwenden.

5. Energiewandler gemäß einem der vorstehenden Ansprüche, **dadurch gekennzeichnet, dass** es eine Filtereinrichtung (F) umfasst, die stromabwärts der ersten Regelschaltung ($L_1$, $C_1$, $M_1$, $D_1$) verbunden ist und dazu angepasst ist, das Schaltrauschen zu filtern.

6. Energiewandler gemäß Anspruch 5, **dadurch gekennzeichnet, dass** die Filtereinrichtung (F) ein Mehrfachsperrfilter umfasst.

7. Energiewandler gemäß einem der vorstehenden Ansprüche, **dadurch gekennzeichnet, dass** es eine Einrichtung (ADC) umfasst, die dazu angepasst ist, zumindest manche der Zustandsvariablen ($I_1$, $V_0$) der ersten Regelschaltung ($L_1$, $C_1$, $M_1$, $D_1$) zu bestimmen, und dass die Steuerungseinheit (UC) mit der Bestimmungseinrichtung (ADC) verbunden ist und dazu angepasst ist, gemäß einem Steuerungsverfahren zu arbeiten, basierend auf dem analytischen Modell der ersten Regelschaltung ($L_1$, $C_1$, $M_1$, $D_1$), das die Werte der bestimmten Zustandsvariablen ($I_1$, $V_0$) berücksichtigt.

8. Energiewandler gemäß einem der vorstehenden Ansprüche, **dadurch gekennzeichnet, dass** er eine Bestimmungseinrichtung (ADC) umfasst, die dazu angepasst ist, die Ausgangsspannung ($V_{out}$) an dem Wandler und die Last ($R_L$), die auf den Ausgang des Wandlers aufgebracht wird, zu erfassen, und bei welchem die Steuerungseinheit (UC) mit der Bestimmungseinrichtung (ADC) verbunden ist und dazu angepasst ist, gemäß einem Steuerungsverfahren zu arbeiten, basierend auf dem analytischen Modell der ersten Regelschaltung ($L_1$, $C_1$, $M_1$, $D_1$), das die bestimmte Ausgangsspannung ($V_{out}$) und die bestimmte Last an dem Ausgang ($R_L$) berücksichtigt.

9. Energiewandler gemäß Anspruch 8, bei dem die Bestimmungseinrichtung (ADC) angepasst ist, die Ausgangsspannung ($V_{out}$) an dem Wandler und den Ausgangsstrom ($I_0$) an dem Wandler zu messen.

10. Energiewandler gemäß einem der vorstehenden Ansprüche, **dadurch gekennzeichnet, dass** er dazu angepasst ist, jeder Art von Last oder Stellglied mit Energie zu versorgen.

11. Amplitudenmodulator, der dazu angepasst ist, am Eingang ein Modulationssignal zu empfangen und einen Verstärker und eine Energiezufuhr umfasst, die dazu angepasst ist, Energie zu zuführen, **dadurch gekennzeichnet, dass** die Energiezufuhr einen Energiewandler gemäß einem der vorstehenden Ansprüche umfasst, dessen Steuerungssignal (A(t)) für die Umwandlung dem Modulationssignal entspricht.

**12.** Funk-Sendeempfänger mit einem Amplitudenmodulator gemäß dem vorstehenden Anspruch.


**Revendications**

**1.** Convertisseur de puissance adapté pour être connecté à une source d'alimentation électrique et pour gérer la circulation de courant de ladite source vers une charge, le convertisseur recevant en entrée un signal de commande (A(t)) pour la conversion et étant **caractérisé en ce qu'**il comprend :

- un premier circuit régulateur ($L_1$, $C_1$, $M_1$, $D_1$) du type abaisseur à modulation en largeur d'impulsion, qui est adapté pour être connecté à une source de tension positive ($V_{cc}$) et ayant comme référence la terre afin de fournir une sortie à tension positive ;
- un circuit de récupération d'énergie, comprenant un deuxième circuit régulateur ($L_2$, $M_2$, $D_2$) du type élévateur à modulation en largeur d'impulsion, connecté audit premier circuit régulateur ($L_1$, $C_1$, $M_1$, $D_1$), qui est adapté pour être connecté à une source de tension négative de support ($V_{dd}$), afin de décharger rapidement les composants de circuit stockant de l'énergie ($L_1$, $C_1$) dudit premier circuit régulateur ($L_1$, $C_1$, $M_1$, $D_1$),

dans lequel :

- l'entrée dudit deuxième circuit régulateur ($L_2$, $M_2$, $D_2$) est connectée à la sortie dudit premier circuit régulateur ($L_1$, $C_1$, $M_1$, $D_1$) et la sortie dudit deuxième circuit régulateur ($L_2$, $M_2$, $D_2$) est connectée à l'entrée dudit premier circuit régulateur ($L_1$, $C_1$, $M_1$, $D_1$),
- le premier circuit régulateur comprend un élément de commutation en série ($M_1$), une diode de dérivation vers la terre ($D_1$), une inductance en série (L1) et un condensateur de dérivation vers la terre ($C_1$),
- le deuxième circuit régulateur comprend une inductance en série (L2), un élément de commutation de dérivation (M2) connecté à la source de tension négative de support (Vdd), et une diode de roue libre (D2) connectée à la source de tension positive (Vcc),

le composant de commutation (M1) du premier circuit régulateur étant excité par un signal de commutation ayant un premier rapport cyclique (Dc) et le composant de commutation (M2) du deuxième circuit régulateur étant excité par un signal de commutation ayant un deuxième rapport cyclique (Ds) ; et

- une unité de commande (UC) pour commuter les composants de circuit ($M_1$, $M_2$) desdits premier ($L_1$, $C_1$, $M_1$, $D_1$) et deuxième ($L_2$, $M_2$, $D_2$) circuits régulateurs, qui est adapté pour commander la commutation desdits composants ($M_1$, $M_2$) et pour déterminer lesdits rapports cycliques ($D_c$, $D_s$) de façon à ce qu'ils ne se chevauchent pas dans le temps, relativement audit signal de commande (A(t)), selon une méthode de commande prédictive prédéterminée basée sur un modèle analytique en boucle ouverte dudit premier circuit régulateur ($L_1$, $C_1$, $M_1$, $D_1$).

**2.** Convertisseur de puissance selon la revendication 1, dans lequel ladite unité de commande (UC) est adaptée pour régler la largeur ($D_c$, $D_s$) des impulsions de commutation périodiquement, à chaque cycle de commutation.

**3.** Convertisseur de puissance selon la revendication 2, **caractérisé en ce que** ladite unité de commande (UC) est adaptée pour régler la largeur ($D_c$, $D_s$) des impulsions de commutation également par rapport au précédent état au moins dudit premier circuit régulateur ($L_1$, $C_1$, $M_1$, $D_1$), en particulier l'état au précédent cycle de commutation.

**4.** Convertisseur de puissance selon l'une des revendications 1 à 3, **caractérisé en ce que** ladite unité de commande (UC) est adaptée pour appliquer une variation dans le domaine temporel aléatoire et variable à la commutation desdits composants de circuit de commutation.

**5.** Convertisseur de puissance selon l'une quelconque des revendications précédentes, **caractérisé en ce qu'**il comprend un moyen de filtrage (F) connecté en aval dudit premier circuit régulateur ($L_1$, $C_1$, $M_1$, $D_1$) et adapté pour éliminer par filtrage le bruit de commutation.

**6.** Convertisseur de puissance selon la revendication 5, **caractérisé en ce que** ledit moyen de filtrage (F) comprend un filtre à plusieurs bandes étroites.

**7.** Convertisseur de puissance selon l'une quelconque des revendications précédentes, **caractérisé en ce qu'**il comprend un moyen (ADC) adapté pour déterminer au moins une partie des variables d'état ($I_1$, $V_0$) dudit premier circuit régulateur ($L_1$, $C_1$, $M_1$, $D_1$), et **en ce que** ladite unité de commande (UC) est connectée audit moyen de détermination (ADC) et est adaptée pour fonctionner selon une méthode de commande, basée sur le modèle analytique du premier circuit régulateur ($L_1$, $C_1$, $M_1$, $D_1$), qui prend en compte les valeurs des variables d'état ($I_1$, $V_0$) déterminées.

**8.** Convertisseur de puissance selon l'une quelconque des revendications précédentes, **caractérisé en ce qu'**il comprend un moyen de détermination (ADC) adapté pour détecter la tension de sortie ($V_{out}$) du convertisseur et la charge ($R_L$) appliquée à la sortie du convertisseur, et dans lequel ladite unité de commande (UC) est connectée audit moyen de détermination (ADC) et est adaptée pour fonctionner selon une méthode de commande, basée sur le modèle analytique du premier circuit régulateur ($L_1$, $C_1$, $M_1$, $D_1$), qui prend en compte la tension de sortie ($V_{out}$) déterminée et la charge appliquée à la sortie ($R_L$) déterminée.

**9.** Convertisseur de puissance selon la revendication 8, dans lequel le moyen de détermination (ADC) est adapté pour mesurer la tension de sortie ($V_{out}$) du convertisseur et le courant de sortie ($I_o$) du convertisseur.

**10.** Convertisseur de puissance selon l'une des revendications précédentes, **caractérisé en ce qu'**il est adapté pour alimenter tout type de charge ou d'actionneur.

**11.** Modulateur d'amplitude adapté pour recevoir en entrée un signal de modulation et comprenant un amplificateur et un dispositif d'alimentation adapté pour fournir de la puissance, **caractérisé en ce que** ledit dispositif d'alimentation comprend un convertisseur de puissance selon l'une des revendications précédentes, dont le signal de commande (A(t)) pour la conversion correspond audit signal de modulation.

**12.** Emetteur radio comprenant un modulateur d'amplitude selon la précédente revendication.

FIG.1

FIG.2

FIG.3A

FIG.3B

FIG.4

FIG.5

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3413570 A
- US 3506920 A
- US 3588744 A
- US 4896372 A
- US 6636112 B

### Non-patent literature cited in the description

- Radio Engineers Handbook. McGraw Hill, 1943
- **J.K. Jau ; F.Y. Han ; M.C. Du ; T.S. Horng ; T.C. Lin.** Polar Modulation-Based RF Power Amplifiers with Enhanced Envelope Processing Technique. *34th European Microwave Conference,* 2004